# EUROPEAN PATENT SPECIFICATION

(11) **EP 2 479 047 B1**
(45) Date of publication and mention of the grant of the patent: **24.04.2013**
(21) Application number: 12151360.0
(22) Date of filing: 17.01.2012
(51) Int. Cl.: B60H 1/34, G02B 27/01

(54) **Defroster outlet**
Entfrosterauslass
Sortie de dégivreur

(30) Priority: 19.01.2011 JP 2011008696
(43) Date of publication of application: 25.07.2012
(73) Proprietor: Honda Motor Co., Ltd., Tokyo 107-8556 (JP)
(72) Inventor: Kasai, Kazunaga, Saitama, 351-0193 (JP)
(74) Representative: Feller, Frank

(56) References cited:
- EP-A1- 0 713 792
- DE-A1-102007 058 441
- JP-A- 11 034 652

## Description

### BACKGROUND OF THE INVENTION

### Field of the Invention

The present invention relates to a defroster outlet of a vehicle.

Priority is claimed on Japanese Patent Application No. 2011-008696, filed January 19, 2011.

### Description of Related Art

In general, an outlet (a defroster grill) used to send air to a front windshield is disposed on a top surface of an instrument panel of a vehicle.

In some recent cases, a light-transmission port of a head-up display used to display a variety of information to be provided to a driver through the use of light is disposed on the top surface of the instrument panel.

Japanese Unexamined Patent Application, First Publication No. H 11-034652 discloses a defroster grill in which an outlet for defroster wind and a light-transmission port of a head-up display are incorporated into a body. This document also discloses the preamble of claim 1.

### SUMMARY OF THE INVENTION

However, in the defroster grill in which the outlet for defroster wind and the light-transmission port of the head-up display are incorporated into a body, when it is intended to guarantee a predetermined size of the light-transmission port of the head-up display, the output for defroster wind is narrowed and thus the defroster wind may not be widely sent to the front windshield. On the other hand, when it is intended to guarantee a satisfactory size of the outlet for defroster wind, the light-transmission port is narrowed and the information display on the head-up display is reduced in size. That is, it is difficult to satisfy both the size of the outlet for defroster wind and the size of the light-transmission port of the head-up display, and thus the size of one thereof needs to be sacrificed.

Therefore, an advantage of some aspects of the invention is that a defroster outlet can be provided which can satisfactorily guarantee both the size of the outlet for defroster wind and the size of the light-transmission port of the head-up display.

The defroster outlet according to the invention employs the following configurations to achieve the above-mentioned advantage.
(1) According to an aspect of the invention, there is provided a defroster outlet including: a defroster outlet part that is disposed in an instrument panel of a vehicle and that has an opening formed along a front windshield; a plurality of fins that are bridged in the opening along a front-rear direction of the vehicle, which serve as guides for sending defroster wind toward an inner surface of the front windshield, and each having a light-emitting portion formed in at least a part of the top end thereof; and a reflecting part that is disposed in the vicinity of the opening and that reflects light from the light-emitting portion to cause a driver and a passenger to see the reflected light.
(2) In the defroster outlet according to (1), the reflecting part may be the inner surface of the front windshield which is inclined downward from a rear side toward a front side in the front-rear direction of the vehicle, and the light-emitting portion may be disposed in a rear end portion of each fin in the front-rear direction of the vehicle.
(3) In the defroster outlet according to (1) or (2), the reflecting part may be the inner surface of the front windshield which is inclined downward from a rear side toward a front side in the front-rear direction of the vehicle, the light-emitting portion may be formed of a light-guiding material, and a light source causing the light-emitting portion to emit light may be disposed on the rear side of the light-guiding material in the front-rear direction of the vehicle.
(4) In the defroster outlet according to (3), the light-emitting portion may be disposed in at least the rear end portion of each fin in the front-rear direction of the vehicle and may include an entrance surface through which light emitted from the light source enters and an exit surface from which the light input from the entrance surface exits, the exit surface may be disposed on an upper surface of the light-emitting portion, and the entrance surface may be disposed on a rear end face of the light-emitting portion in the front-rear direction of the vehicle.
(5) In the defroster outlet according to (1), the light-emitting portion may be formed of a light-guiding material and may be disposed in at least a front end portion of each fin in the front-rear direction of the vehicle, a light source causing the light-emitting portion to emit light may be disposed on a front side of the light-guiding material in the front-rear direction of the vehicle, the light-emitting portion may include an entrance surface through which light emitted from the light source enters and an exit surface from which the light input from the entrance surface exits, the exit surface may be disposed on the surface of the light-emitting portion, and the entrance surface may be disposed on a front end face of the light-emitting portion in the front-rear direction of the vehicle.
(6) In the defroster outlet according to any one of (1) to (5), an upper surface of the light-emitting portion may have a shape which is inclined downward toward the outside in the width direction of the vehicle in a sectional surface perpendicular to the front-rear direction of the vehicle.
(7) In the defroster outlet according to any one of (1) to (6), each fin may be constructed by the light-emitting portion.

In the defroster outlet according to (1) of the invention, since the outlet for defroster wind and the light-transmission port of the head-up display can be arranged to overlap at the same position, it is possible to guarantee satisfactory sizes of both a sending area of defroster wind and a light-transmitting area in the head-up display. In addition, since it is not necessary to separately machine and form the light-transmission port of the head-up display in the instrument panel, it is possible to improve productivity.

In the defroster outlet according to (2) of the invention, since the light emitted from the light-emitting portion can be reflected from a higher part of the reflecting part, a driver can easily see the light and it is thus possible to improve light visibility.

In the defroster outlet according to (3) of the invention, since light from a part of the light-emitting portion closer to the light source is more intense and the intense light can be reflected from a higher part of the reflecting part, a driver can easily see the light and it is thus possible to improve light visibility.

In the defroster outlet according to (4) of the invention, it is possible to reduce the size of the defrost outlet in the width direction of the vehicle. Since light from the light source can be made to efficiently enter the light-emitting portion, it is possible to enhance the intensity of entering light and thus to improve the driver's visibility of light.

In the defroster outlet according to (5) of the invention, it is possible to reduce the size of the defrost outlet in the width direction of the vehicle. Since light from the light source can be made to efficiently enter the light-emitting portion, it is possible to enhance entering light intensity and thus to improve the driver's visibility of light.

In the defroster outlet according to (6) of the invention, when the outside of the vehicle is bright and the light-emitting portions do not emit light, external light reflected by the fins can be diffused, thereby reducing useless background reflection on the reflecting part.

In the defroster outlet according to (7) of the invention, it is possible to reduce the number of components.

### BRIEF DESCRIPTION OF THE DRAWINGS

FIG. 1 is a perspective view of the periphery of an instrument panel of a vehicle having a defroster outlet according to an embodiment of the invention as viewed from inside of the vehicle.
FIG. 2 is a longitudinal sectional view of the defroster outlet.
FIG. 3 is a perspective view of the defroster outlet.
FIG. 4 is a longitudinal sectional view illustrating an optical path of light emitted from light-emitting portions of the defroster outlet.
FIG. 5A is a perspective view illustrating a fin of the defroster outlet and an example of a light-emitting portion disposed in the fin.
FIG. 5B is a perspective view illustrating another example of the light-emitting portion.
FIG. 5C is a perspective view illustrating still another example of the light-emitting portion.
FIG. 5D is a perspective view illustrating still another example of the light-emitting portion.
FIG. 6A is a longitudinal view illustrating a sectional shape of the light-emitting portion of the defroster outlet.
FIG. 6B is a longitudinal view illustrating another example of the light-emitting portion.
FIG. 6C is a longitudinal view illustrating still another example of the light-emitting portion.
FIG. 7(a) to (c) are diagrams illustrating the size of an image of the light-emitting portion appearing in the reflecting part for comparison.

### DETAILED DESCRIPTION OF THE INVENTION

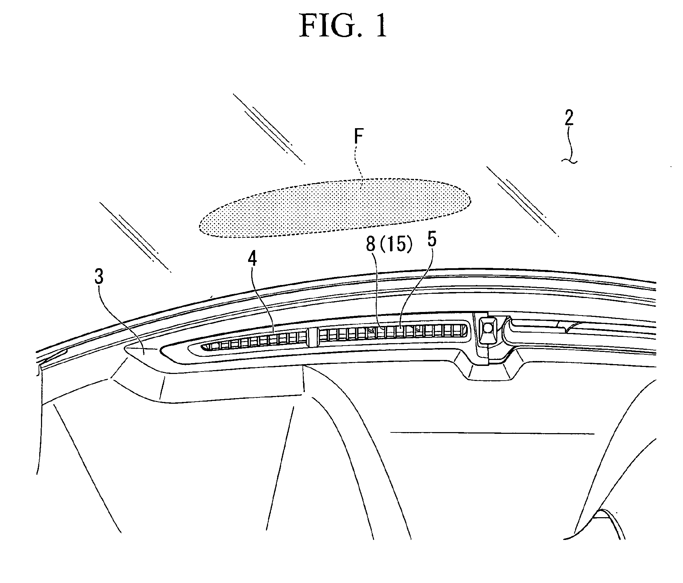

Hereinafter, a defroster outlet according to an embodiment of the invention will be described with reference to FIGS. 1 to 7. In the following description, a longitudinal direction corresponds to a front-rear direction of a vehicle, a lateral direction corresponds to the width direction of the vehicle, and a vertical direction corresponds to the height direction of the vehicle.

FIG. 1 is a perspective view illustrating the interior of a left-hand drive vehicle when the front side of the vehicle is viewed from the driver's seat of the vehicle.

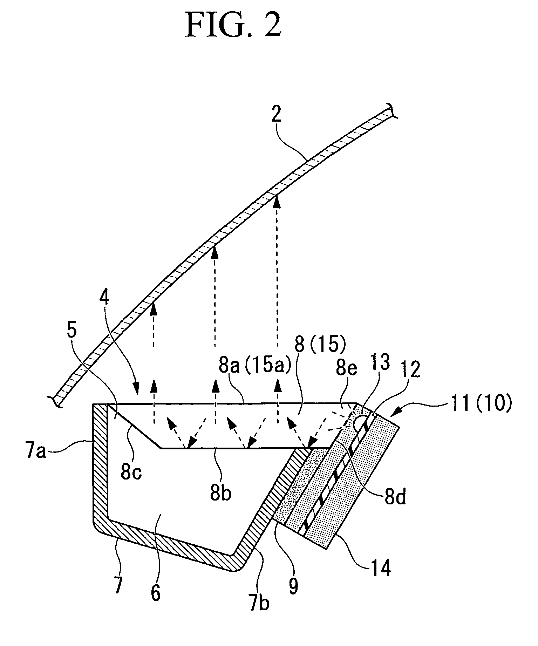

An instrument panel 3 is disposed in front side of the bottom of a front windshield 2 of the vehicle (on the interior side of the vehicle). In a region of the instrument panel 3 where it is closer to the center in the width direction of the vehicle than the front of the driver's seat, a defroster grill 4 is disposed along the lower edge of the front windshield 2. The front windshield 2 is inclined downward from the rear side toward the front side as shown in FIG. 2.

As shown in the longitudinal sectional view of FIG. 2, the defroster grill 4 includes a peripheral wall portion 7 having an opening 5 at the top portion and having an air passage 6 formed therein, and plural fins 8 bridged between a front wall portion 7a and a rear wall portion 7b of the peripheral wall portion 7 along in the front-rear direction. That is, each fin 8 is bridged in the opening 5 along in the front-rear direction. The air passage 6 is connected to an air conditioner via an air duct not shown and is capable of blowing out an air which is air-conditioned by the air conditioner toward the inner surface of the front windshield 2 from the opening 5, as a defroster wind. A blowing direction of the defroster wind is set by the fins 8. The rear wall portion 7b of the peripheral wall portion 7 is inclined downward from the rear side toward the front side.

Each fin 8 is formed of a light-guiding material such as a transparent resin plate. A top face 8a and a bottom face 8b of each fin 8 are formed in substantially horizontal planes parallel to each other. A front end face 8c of the fin 8 is formed in an inclined plane inclined downward from the front side toward the rear side. A rear end face 8d of the fin 8 is formed in the inclined plane inclined downward from the rear side toward the front side. The top face 8a of the fin 8 is substantially flush with a top surface of the front wall portion 7a of the peripheral wall portion 7 and the rear portion 8e of the fin 8 is placed on and fixed to the rear wall portion 7b of the peripheral wall portion 7.

A light-emitting portion 11 of a head-up display apparatus 10 is fixed to the rear surface of the rear wall portion 7b of the peripheral wall portion 7 with a fixing member 9. The head-up display apparatus 10 in this embodiment serves to cause a driver of the vehicle to recognize various alarms such as an alarm given when the inter-vehicle distance between the vehicle and a preceding vehicle is smaller than a predetermined distance through the emission of light.

The light-exiting portion 11 includes a housing 14, a substrate 12 disposed in the housing 14, and plural lights (light sources) 13 disposed one by one on the surface of the substrate 12 opposed to the fins 8 to correspond to the fins 8. Each light 13 is disposed to oppose the rear end face 8d of the corresponding fin 8. In other words, the rear end face 8d of each fin 8 is located just in the front of the corresponding light 13.

In this embodiment, each fin 8 of the defroster grill 4 forms a light-emitting portion 15 of the head-up display apparatus 10 and a part of the front windshield 2 forms a reflecting part of the head-up display apparatus 10.

Therefore, the fin 8 forming each of the light-emitting portion 15 of the head-up display apparatus 10 is formed of a transmissive light-guiding material and the light 13 serving as a light source causing the light-emitting portion 15 to emit light is disposed one by one behind each fin 8. The rear end face 8d of the fin 8 (the light-emitting portion 15) serves as an entrance surface through which light emitted from the light 13 enters and the top face 8a of the fin 8 (the light-emitting portion 15) serves as an exit surface from which the light entering the fin 8 exits.

The front windshield 2 forming the reflecting part of the head-up display apparatus 10 has a plane shape inclined downward from the rear side toward the front side.

In the defroster outlet having the above-mentioned configuration, when an alarm signal is output to the head-up display apparatus 10 from a controller which is not shown, all the lights 13 are turned on.

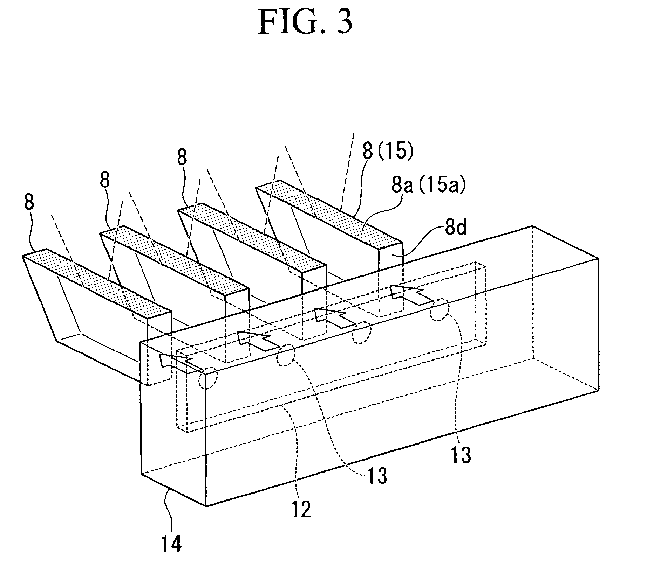

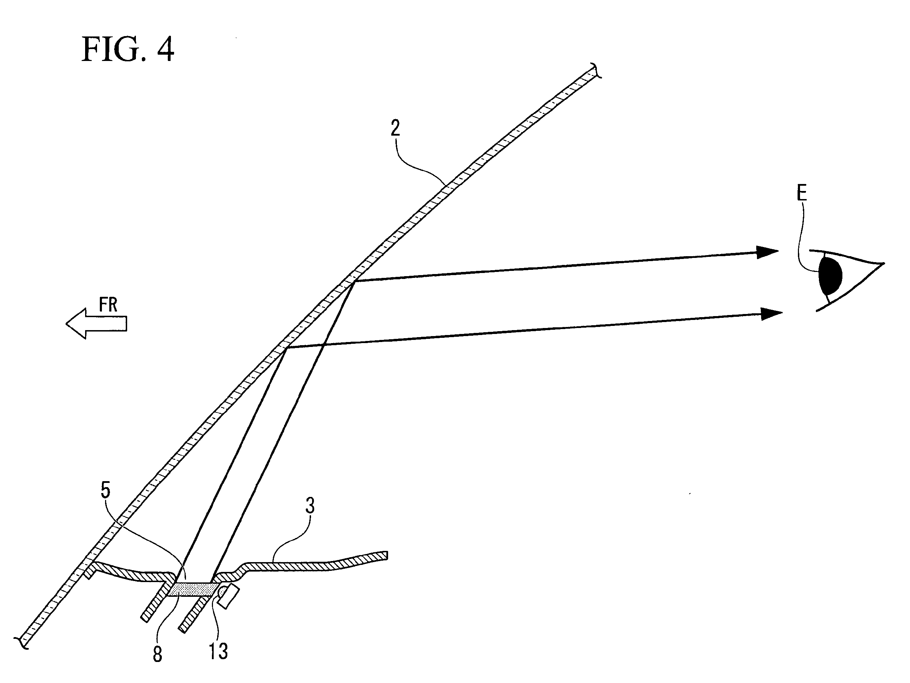

That is, as shown in FIG. 3, light emitted from the lights 13 enters each fin 8 from the rear end face 8d of the fin 8 of the defroster grill 4, is reflected by the bottom face 8b of the fin 8 or the front end face 8c, travels in the fin 8, and exits to the front windshield 2 from the top face 8a of the fin 8. As shown in FIG. 4, the light exiting from each fin 8 is reflected to a driver and passenger side by the front windshield 2 and enters the driver's and the passenger's eye E. As a result, as shown in FIG. 1, a long and thin image F of light in the width direction of the vehicle as a whole appears in the front windshield 2 above the defroster grill 4 and can be seen as an alarm by the driver and the passenger.

The top face 8a of each fin 8 (the light-emitting portion 15) may be treated by a surface texturing. In this case, it is possible to diffuse light to exit and to enlarge the image F.

An alarm sound may be output along with the alarm using light in the head-up display apparatus 10.

In the defroster outlet according to this embodiment, since the outlet for defroster wind of the defroster grill 4 and the light-transmitting part of the head-up display apparatus 10 can be arranged to overlap at the same position, it is possible to guarantee satisfactory sizes of both a sending area of defroster wind and a light-transmitting area in the head-up display apparatus. In addition, since it is not necessary to machine and form only the light-transmission port of the head-up display apparatus 10 in the instrument panel 3, it is possible to improve productivity.

Since the front windshield 2 constituting the reflecting part is inclined downward from the rear side to the front side, the entire fin 8 constitutes each light-emitting portion 15, and the light-emitting portion 15 is disposed at the rear end of each fin 8, light emitted from the fin 8 can be reflected at a higher position of the front windshield 2 as shown in FIG. 4. As a result, a driver can easily see the light and the light visibility is improved.

Since the light 13 is disposed in the back of each fin 8 (each light-emitting portion 15) and light emitted from the lights 13 is input from the rear end face 8d of each fin 8 (light-emitting portion 15), it is possible to cause the light of each light 13 to efficiently enter the corresponding light-emitting portion 15, and it is possible to enhance the entering light intensity. Since light from a part of the fin 8 (light-emitting portion 15) closer to the light 13 is more intense and the intense light can be reflected at the higher position of the front windshield 2, the driver and the passenger can easily see the light and it is thus possible to improve light visibility.

Since each light 13 is disposed in the back of the corresponding fin 8 (light-emitting portion 15), the lights 13 do not protrude to the outside in the width direction of the vehicle from the defroster grill 4 and it is possible to reduce the size of the defroster outlet in the width direction of the vehicle.

Since the entire part of each fin 8 of the defroster grill 4 is formed of a light-guiding material to cause the entire fin 8 to serve as the light-emitting portion 15, it is possible to reduce the number of components.

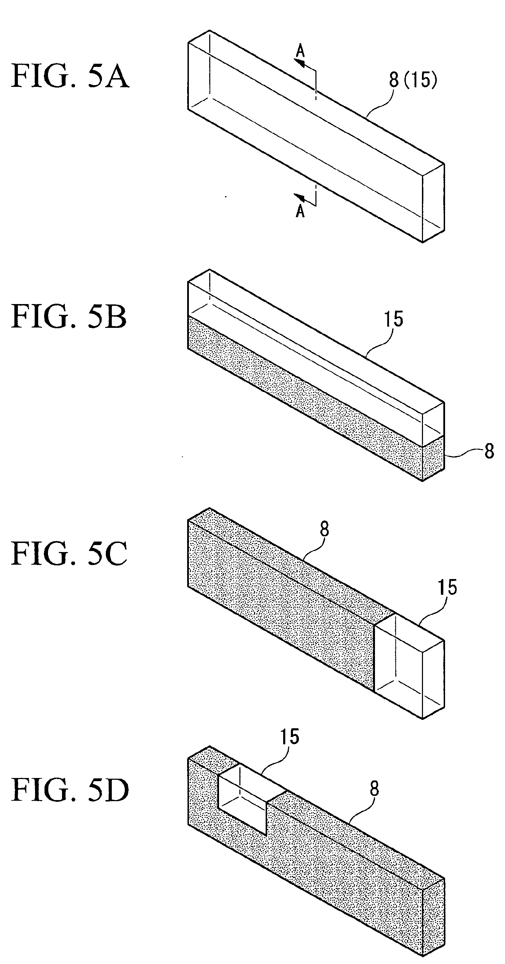

Although it has been described in the above-mentioned embodiment that the entire part of each fin 8 of the defroster grill 4 is formed of a light-guiding material to cause the entire part of each fin 8 to serve as the light-emitting portion 15 (corresponding to FIG. 5A), the invention is not limited to this embodiment.

For example, as shown in FIG. 5B, only the upper half of each fin 8 may be formed of a light-guiding material to serve as the light-emitting portion 15, or as shown in FIG. 5C, only the rear side in the front-rear direction of the vehicle may be formed of a light-guiding material to serve as the light-emitting portion 15.

As shown in FIG. 5D, only a partial top end portion of each fin 8 in the front-rear direction may be formed of a light-guiding material to serve as the light-emitting portion 15.

Although not shown in the drawings, the light source may not be disposed outside of the each fin 8, but may be disposed inside the light-emitting portion 15 of the fin 8.

Although it has been described in the above-mentioned embodiment that the light 13 as a light source is disposed for each light-emitting portion 15, the lights 13 as plural light sources may be disposed for each light-emitting portion 15 or light emitted from a single light source may be guided to the light-emitting portions 15 via plural light-guiding paths.

The light-emitting portion 15 formed of a light-guiding material may be disposed in at least a front end portion of each fin 8, a front end face of the light-emitting portion 15 may be used as an entrance surface, a top face of the light-emitting portion 15 may be used as an exit surface, the light 13 may be disposed in a front of the light-emitting portion 15, and light from the light 13 may be made to enter the light-emitting portion 15 from the entrance surface. By this configuration, it is also possible to cause light from the light 13 to efficiently enter the light-emitting portion 15 and to enhance the entering light intensity. The lights 13 do not protrude from the defroster grill 4 in the width direction of the vehicle and it is thus possible to reduce the size of the defroster outlet in the width direction of the vehicle.

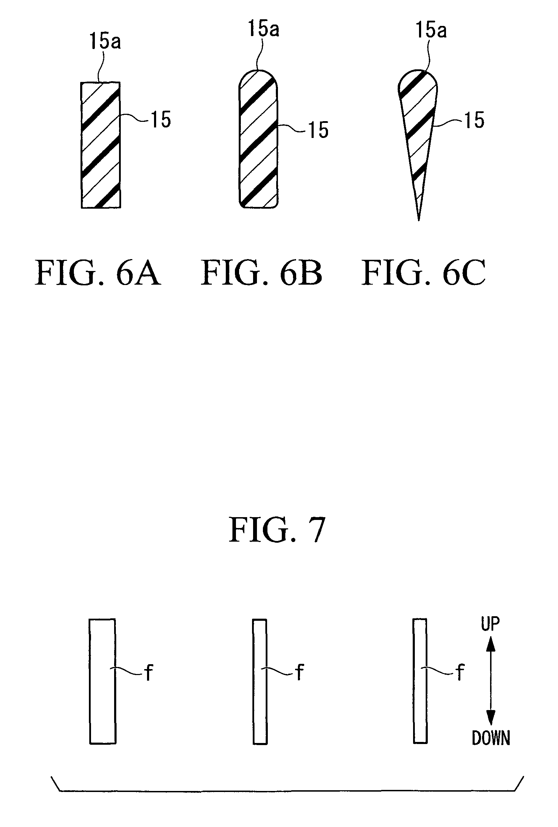

In bright circumstances such as daytime, when the lights 13 are not turned on, outside light is reflected from the top face of the light-emitting portion 15 of each fin 8 to illuminate the front windshield 2 and appears as an image of the light-emitting portion 15 in the front windshield 2. In this case, when the top surface 15a of the light-emitting portion 15 is formed flat as shown in FIG. 6A, the image f of the light-emitting portion 15 appearing in the front windshield 2 is an image with a large width in the lateral direction, which may be troublesome for the driver and the passenger as shown in FIG. 7(a). FIG. 6A corresponds to the section taken line A-A in FIG. 5A.

Therefore, when the top face 15a of the light-emitting portion 15 is formed in a shape inclined downward toward the outside in the width direction of the vehicle in the section perpendicular to the front-rear direction of the vehicle, for example, in an upward-convex semicircular shape as shown in FIGS. 6B and 6C, it is able to cause a diffuse reflection of the outside light reflected by the top face 15a of the light-emitting portion 15, and thereby it is possible to reduce the light intensity reflected toward the front windshield 2. As a result, the image f of the light-emitting portion 15 appearing in the front windshield 2 becomes an image with a small width in the lateral direction as shown in FIGS. 7(b) and 7(c) and the background reflection on the front windshield 2 can be reduced, thereby reducing any uncomfortable feeling.

Although the reflecting part is constructed by the front windshield in the above-mentioned embodiment, the reflecting part is not limited to the front windshield, and the reflecting part may be constructed by a combiner or a screen. In this case, by lowering the transmittance of the combiner or the screen, an alarm using light is more clearly seen by the driver and the passenger. The defroster outlet according to this embodiment may be a display device including a reflecting part (the inner surface of the front windshield).

A defroster outlet includes: a defroster outlet part that is disposed in an instrument panel of a vehicle and that has an opening formed along a front windshield; a plurality of fins that are bridged in the opening along a front-rear direction of the vehicle, which serve as guides for sending defroster wind toward an inner surface of the front windshield, and each having a light-emitting portion formed in at least a part of the top end thereof; and a reflecting part that is disposed in the vicinity of the opening and that reflects light from the light-emitting portion to cause a driver and a passenger to see the reflected light.

## Claims

1. A defroster outlet (4) comprising:
a defroster outlet part that is disposed in an instrument panel (3) of a vehicle and that has an opening formed along a front windshield (2);
a plurality of fins (8) that are bridged in the opening along a front-rear direction of the vehicle, which serve as guides for sending defroster wind toward an inner surface of the front windshield (2) the outlet being **characterised in that** each fin has a light-emitting portion (15) formed in at least a part of the top end thereof; and
a reflecting part is disposed in the vicinity of the opening and reflects light from the light-emitting portion (15) to cause a driver and a passenger to see the reflected light.

2. The defroster outlet according to Claim 1, wherein the reflecting part is the inner surface of the front windshield which is inclined downward from a rear side toward a front side in the front-rear direction of the vehicle, and
wherein the light-emitting portion (15) is disposed in a rear end portion (8e) of each fin in the front-rear direction of the vehicle.

3. The defroster outlet according to Claim 1 or 2, wherein the reflecting part is the inner surface of the front windshield which is inclined downward from a rear side toward a front side in the front-rear direction of the vehicle,
wherein the light-emitting portion is formed of a light-guiding material, and
wherein a light source (13) causing the light-emitting portion to emit light is disposed on the rear side of the light-guiding material in the front-rear direction of the vehicle.

4. The defroster outlet according to Claim 3, wherein the light-emitting portion is disposed in at least the rear end portion (8e) of each fin in the front-rear direction of the vehicle and comprises an entrance surface (8d) through which light emitted from the light source enters and an exit surface (8a) from which the light input from the entrance surface exits,
wherein the exit surface is disposed on an upper surface of the light-emitting portion, and
wherein the entrance surface is disposed on a rear end face of the light-emitting portion in the front-rear direction of the vehicle.

5. The defroster outlet according to Claim 1, wherein the light-emitting portion (15) is formed of a light-guiding material and is disposed in at least a front end portion of each fin in the front-rear direction of the vehicle,
wherein a light source (13) causing the light-emitting portion (15) to emit light is disposed on a front side of the light-guiding material in the front-rear direction of the vehicle,
wherein the light-emitting portion comprises an entrance surface through which light emitted from the light source enters and an exit surface from which the light input from the entrance surface exits,
wherein the exit surface (8a) is disposed on the surface of the light-emitting portion, and
wherein the entrance surface is disposed on a front end face of the light-emitting portion in the front-rear direction of the vehicle.

6. The defroster outlet (4) according to Claim 1, wherein an upper surface of the light-emitting portion (15) has a shape which is inclined downward toward the outside in the width direction of the vehicle in a sectional surface perpendicular to the front-rear direction of the vehicle.

7. The defroster outlet according to Claim 1, wherein each fin (8) is constructed by the light-emitting portion (5).

## Patentansprüche

1. Entfrosterauslass (4) umfassend:
ein Entfrosterauslassteil, welches in einer Instrumententafel (3) eines Fahrzeugs angeordnet ist und welches eine entlang einer Frontwindschutzscheibe (2) geformte Öffnung aufweist;
eine Mehrzahl von Finnen (8), welche die Öffnung entlang einer Front-Heck Richtung des Fahrzeugs überbrücken, welche als Führungen dienen, um Entfrosterwind in Richtung einer innere Fläche der Frontwindschutzscheibe (2) zu schicken, wobei der Auslass
**dadurch gekennzeichnet ist, dass** jede Finne einen Licht emittierenden Abschnitt (15) aufweist, welcher in wenigstens einem Teil des oberen Endes davon ausgebildet ist; und
ein reflektierendes Teil in der Nähe der Öffnung angeordnet ist und Licht von dem Licht emittierenden Abschnitt (15) reflektiert, was dazu führt, dass ein Fahrer und ein Passagier das reflektierte Licht sehen.

2. Entfrosterauslass nach Anspruch 1, wobei das reflektierende Teil die innere Fläche der Frontwindschutzscheibe ist, welche, in der Front-Heck Richtung des Fahrzeugs, nach unten, von einer Heckseite in Richtung auf eine Frontseite zu, geneigt ist, und
wobei der Licht emittierende Abschnitt (15) in der Front-Heck Richtung des Fahrzeugs in einem Heckendabschnitt (8e) jeder Finne angeordnet ist.

3. Entfrosterauslass nach Anspruch 1 oder 2, wobei das reflektierende Teil die innere Fläche der Frontwindschutzscheibe ist, welche, in der Front-Heck Richtung des Fahrzeugs, nach unten, von einer Heckseite in Richtung auf eine Frontseite zu, geneigt ist,
wobei der Licht emittierende Abschnitt aus einem Licht leitendem Material ausgebildet ist, und wobei eine Lichtquelle (13), welche dazu führt, dass der Licht emittierenden Abschnitt Licht emittiert, in der Front-Heck Richtung des Fahrzeugs an der Heckseite des Licht leitendem Materials angeordnet ist.

4. Entfrosterauslass nach Anspruch 3, wobei der Licht emittierende Abschnitt in wenigstens dem Heckendabschnitt (8e) jeder Finne in der Front-Heck Richtung des Fahrzeugs angeordnet ist und eine Eintrittsfläche (8d), durch welche von der Lichtquelle emittiertes Licht eintritt, und eine Austrittsfläche (8a), aus welcher die Lichteingabe von der Eintrittsfläche austritt, umfasst,
wobei die Austrittsfläche an einer oberen Fläche des Licht emittierenden Abschnitts angeordnet ist, und
wobei die Eintrittsfläche auf einer Heckendseite des Licht emittierenden Abschnitts in der Front-Heck Richtung des Fahrzeugs angeordnet ist.

5. Entfrosterauslass nach Anspruch 1, wobei der Licht emittierende Abschnitt (15) aus einem Licht leitendem Material ausgebildet und
in der Front-Heck Richtung des Fahrzeugs in wenigstens einem Frontendabschnitt jeder Finne angeordnet ist,
wobei eine Lichtquelle (13), welche dazu führt, das der Licht emittierenden Abschnitt (15) Licht emittiert, in der Front-Heck Richtung des Fahrzeugs an einer Frontseite des Licht leitenden Materials angeordnet ist,
wobei der Licht emittierende Abschnitt eine Eintrittsfläche, durch welche von der Lichtquelle emittiertes Licht eintritt, und eine Austrittsfläche, aus welcher die Lichteingabe von der Eintrittsfläche austritt, umfasst,
wobei die Austrittsfläche (8a) an der Fläche des Licht emittierenden Abschnitts angeordnet ist, und
wobei die Eintrittsfläche auf einer Frontseite des Licht emittierenden Abschnitts in der Front-Heck Richtung des Fahrzeugs angeordnet ist.

6. Entfrosterauslass (4) nach Anspruch 1, wobei eine obere Fläche des Licht emittierenden Abschnitts (15) eine Form aufweist, welche nach unten nach außen in der Breitenrichtung des Fahrzeugs in einer zu der Front-Heck Richtung des Fahrzeugs senkrechten Querschnittsfläche geneigt ist.

7. Entfrosterauslass nach Anspruch 1, wobei jede Finne (8) durch den Licht emittierenden Abschnitt (15) ausgebildet ist.

## Revendications

1. Sortie de dégivreur (4) comprenant:
une partie de sortie de dégivreur qui est disposée dans un tableau de bord (3) d'un véhicule et qui a une ouverture formée le long d'un pare-brise (2);
une pluralité d'ailettes (8) qui sont pontées dans l'ouverture le long d'une direction avant-arrière du véhicule et servent de guides pour l'envoi d'air de dégivrage vers une surface intérieure du pare-brise (2), la sortie étant **caractérisée en ce que** chaque ailette a une partie émettrice de lumière (15) formée dans au moins une partie de son extrémité supérieure; et
une partie réfléchissante est disposée à proximité de l'ouverture et réfléchit la lumière de la partie émettrice de lumière (15) pour amener un conducteur et un passager à voir la lumière réfléchie.

2. Sortie de dégivreur suivant la revendication 1, dans laquelle la partie réfléchissante est la surface intérieure du pare-brise avant qui est inclinée vers le bas depuis un côté arrière vers un côté avant dans la direction avant-arrière du véhicule, et
dans laquelle la partie émettrice de lumière (15) est disposée dans une partie d'extrémité arrière (8e) de chaque ailette dans la direction avant-arrière du véhicule.

3. Sortie de dégivreur suivant la revendication 1 ou 2, dans laquelle la partie réfléchissante est la surface intérieure du pare-brise avant qui est inclinée vers le bas depuis un côté arrière vers un côté avant dans la direction avant-arrière du véhicule,
dans laquelle la partie émettrice de lumière est formée d'un matériau guide de lumière, et
dans laquelle une source de lumière (13) amenant la partie émettrice de lumière à émettre de la lumière est disposée du côté arrière du matériau guide de lumière dans la direction avant-arrière du véhicule.

4. Sortie de dégivreur suivant la revendication 3, dans laquelle la partie émettrice de lumière est disposée dans au moins la partie d'extrémité arrière (8e) de chaque ailette dans la direction avant-arrière du véhicule et comprend une surface d'entrée (8d) à travers laquelle entre la lumière émise par la source de lumière et une surface de sortie (8a) par laquelle sort la lumière entrée par la surface d'entrée,
dans laquelle la surface de sortie est disposée sur une surface supérieure de la partie émettrice de lumière, et
dans laquelle la surface d'entrée est disposée sur une partie d'extrémité arrière de la partie émettrice de lumière dans la direction avant-arrière du véhicule.

5. Sortie de dégivreur suivant la revendication 1, dans laquelle la partie émettrice de lumière (15) est formée d'un matériau guide de lumière et est disposée dans au moins une partie d'extrémité avant de chaque ailette dans la direction avant-arrière du véhicule,
dans laquelle une source de lumière (13) amenant la partie émettrice de lumière (15) à émettre de la lumière est disposée d'un côté avant du matériau guide de lumière dans la direction avant-arrière du véhicule,
dans laquelle la partie émettrice de lumière comprend une surface d'entrée à travers laquelle entre la lumière émise par la source de lumière et une surface de sortie par laquelle sort la lumière entrée par la surface d'entrée,
dans laquelle la surface de sortie (8a) est disposée sur la surface de la partie émettrice de lumière,
et
dans laquelle la surface d'entrée est disposée sur une face d'extrémité avant de la partie émettrice de lumière dans la direction avant-arrière du véhicule.

6. Sortie de dégivreur (4) suivant la revendication 1, dans laquelle une surface supérieure de la partie émettrice de lumière (15) a une forme qui est inclinée vers le bas vers l'extérieur dans la direction de la largeur du véhicule dans une surface de coupe perpendiculaire à la direction avant-arrière du véhicule.

7. Sortie de dégivreur suivant la revendication 1, dans laquelle chaque ailette (8) est constituée par la partie émettrice de lumière (15).
